# EUROPEAN PATENT APPLICATION

(11) **EP 2 372 986 A1**
(43) Date of publication of application: **05.10.2011**
(21) Application number: 10188675.2
(22) Date of filing: 21.08.2007
(51) Int. Cl.: H04M 1/725

(54) **Method and system for changing skin of portable terminal**

(30) Priority: 04.09.2006 KR 20060084745
(62) Divisional of application: 07016345.6
(71) Applicant: SAMSUNG ELECTRONICS CO., LTD., Suwon-si, Gyeonggi-do (KR)
(72) Inventor: Choi, Yeon Kyu, Suwon-si, Gyeonggi-do (KR); Chae, Suk Woo, Suwon-si, Gyeonggi-do (KR)
(74) Representative: Lang, Johannes

(57) **Abstract**

A method and a system for changing the skin of a portable terminal are provided. The method includes downloading and storing a selection skin, designating and activating the stored selection skin, determining whether to adjust characteristics of the activated selection skin, adjusting a script file to adjust the characteristics of the activated selection skin according to a result of the determination of whether to adjust the characteristics of the activated selection skin, and storing the activated selection skin having the adjusted characteristics.

## Description

### BACKGROUND OF THE INVENTION

### FIELD OF THE INVENTION

The present invention relates to a method and a system for changing the skin of a portable terminal. More particularly, the present invention relates to a method and a system for changing the skin of a portable terminal by downloading a skin created on an object-oriented basis and selectively associating a skin stored in the portable terminal with the downloaded skin so as to construct the overall skin.

### DISCUSSION OF THE BACKGROUND

As generally known in the art, skins include a background screen and text containing an explanation of an object, for example, buttons and icons for inputting the user's selection. The user designates a user interface region on the screen of a display device. Then, a skin is displayed in the user interface region so that the user is provided with the text containing an explanation of an object and may input a desired operation command with the buttons and icons.

It is customary to store a number of skins in the memory of a portable terminal when it is manufactured so that its user can select a desired skin. Skins are typically used to change the idle screen of portable terminals.

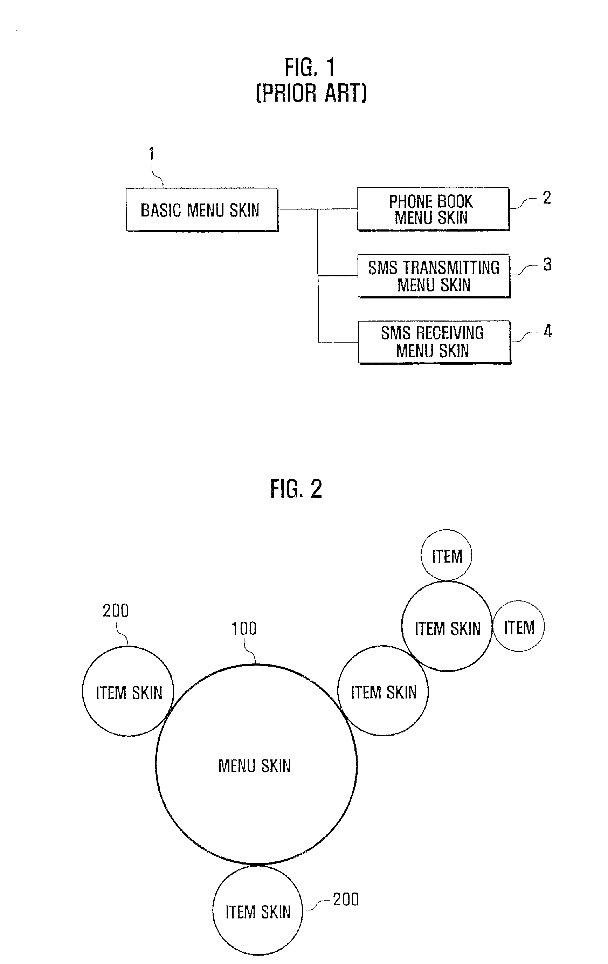

However, conventional skins may neither be modified nor expanded because they are defined by preprocessors when portable terminals are manufactured. FIG. 1 shows a skin applied to a portable terminal according to the prior art.

Referring to FIG. 1, a conventional skin for a portable terminal includes a basic menu skin 1 applied to a basic menu, a phone book skin 2 applied when a phone book is activated, a message receiving menu skin 3 applied to a message receiving menu, and a message transmitting menu skin 4 applied to a message transmitting menu.

The basic menu skin 1, the phone book menu skin 2, the message receiving menu skin 3, and the message transmitting menu skin 4 define a screen configuration resulting from menu activation. Particularly, the basic menu skin 1, the phone book menu skin 2, the message receiving menu skin 3, and the message transmitting menu skin 4 define the names of image files, the sizes (e.g. width, height) of pop-ups, etc. using a preprocessor. In addition, the characteristics of menu items included in the respective skins, particularly the width and area of the menu box, are defined and designated in advance so that the size and location of the box are fixed.

As mentioned above, conventional skins for portable terminals have a problem in that, since the size, activation location, color, etc. of the skins are predetermined by manufacturers when portable terminals are fabricated, purchasers/users of the portable terminals may not be able to customize the skin.

In an attempt to solve these problems, a method and a system for downloading a skin using a PC or wireless Internet and applying it to the display unit of a portable terminal have been proposed. However, this may merely change the background screen (i.e. idle screen). Furthermore, the user may neither modify nor expand the provided skin. As a result, the conventional approach has failed to satisfy various user demands.

### SUMMARY OF THE INVENTION

The present invention provides a method and a system for changing the skin of a portable terminal by providing object-oriented skins, which may be applied to the portable terminal and which may be connected/disconnected independently, so that the user of the portable terminal may partially apply a skin which is to be modified and converted.

The present invention also provides a method and a system for changing the skin of a portable terminal, wherein the entire skin is provided by associating it with a partially applied skin among the skins so that the consumer can apply skins in a diversified and easy manner.

In addition, the present invention provides a method and a system for changing the skin of a portable terminal by providing skins, which are applied to the portable terminal and the characteristics of which may be manually defined by the user of the portable terminal, and enabling users to share their customized skins so that the originality and diversity of respective users may be supported.

Furthermore, the present invention provides a method and a system for changing the skin of a portable terminal by providing skins that are applied to the portable terminal and adapted for respective menus in a detailed and diversified manner so that the user of the portable terminal may be encouraged to utilize skins and development and sale of the skins may create new economic merits.

Moreover, the present invention provides a method and a system for changing the skin of a portable terminal by providing a standardized skin including the location and size of images and items applicable to the portable terminal, key maps, the number, location, and contents of lists, the location and size of pop-ups, etc. so that a skin may be combined according to the user's request and easily applied to the portable terminal, thereby satisfying various user demands.

Additional features of the invention will be set forth in the description which follows, and in part will be apparent from the description, or may be learned by practice of the invention.

The present invention discloses a method for changing a skin of a portable terminal, the method including downloading and storing a selection, designating and activating the stored selection skin, determining whether to adjust characteristics of the activated selection skin, adjusting a script file to adjust the characteristics of the activated selection skin according to a result of the determination of whether to adjust the characteristics of the activated selection skin, and storing the activated selection skin having the adjusted characteristics.

The present invention also discloses a method for changing a skin of a portable terminal, the method including downloading and storing a first selection skin and a second selection skin. The first selection skin is adapted to replace a menu skin having at least one object constituting a screen of the portable terminal, and the second selection skin is adapted to replace an item skin corresponding to the object. A stored selection skin is applied to at least one of the menu skin and the item skin.

The present invention also discloses a system for changing a skin of a portable terminal, the system including a memory to store at least one of a first selection skin and a second selection skin, a display unit to apply and display a designated selection skin of the stored selection skins, a key input unit to create a key input signal to select from the selection skins stored in the memory, a radio frequency (RF) unit to establish a communication channel to download at least one of the first and second selection skins, and a control unit to control a flow of signals among the memory, the display unit, the key input unit, and the RF unit, to adjust characteristics of selection skins stored in the memory, and to apply the adjusted selection skin to the display unit. The first selection skin is adapted to replace a menu skin having at least one object constituting a screen of the portable terminal and the second selection skin is adapted to replace an item skin corresponding to the object.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 briefly shows a menu skin of a portable terminal.
FIG. 2 shows a skin conversion scheme according to an exemplary embodiment of the present invention.
FIG. 3 shows the configuration of an item skin according to an exemplary embodiment of the present invention.
FIG. 4 is a flowchart showing a skin conversion method according to an exemplary embodiment of the present invention.
FIG. 5 shows an XML scrip file for skin conversion according to an exemplary embodiment of the present invention.
FIG. 6 shows the configuration of screens displaying integrated skin adjustment tools according to exemplary embodiments of the present invention.
FIG. 7A and FIG. 7B show the configuration of screens before and after a skin is applied according to exemplary embodiments of the present invention.
FIG. 8 is a block diagram showing a skin conversion system according to an exemplary embodiment of the present invention.
FIG. 9A and FIG. 9B show the configuration of systems for downloading selected skins according to exemplary embodiments of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. Like reference numerals in the drawings denote like elements.

Those skilled in the art can easily understand that the terminology used in the following description and the claims is not to be interpreted based on conventions or dictionaries, but based on the principle that the inventor can properly define terminology in order to best define the invention. In addition, the construction described and shown in the specification and drawings corresponds only to exemplary embodiments of the present invention, and does not include the entire technological idea of the present invention. Various changes or modifications of the exemplary embodiments are possible without departing from the scope of the invention.

It will be assumed in the following description of a method for obtaining skins to be applied to a portable terminal that skins are downloaded by using a PC or wireless Internet. However, the method for obtaining skins according to the present invention is not limited to that. Particularly, the method for obtaining skins for a method and a system for changing the skin of a portable terminal according to an exemplary embodiment of the present invention includes a method of downloading skins using a PC or wireless Internet, a method of directly downloading skins from a storage device using a USB cable, a method of purchasing a skin package, which is stored in a memory and sold as a package, mounting the package on the portable terminal, and downloading the package, and various combinations of these methods.

In order to clarify the gist of the present invention and facilitate the description and understanding thereof, a screen including an image applied to a portable terminal, an item's location and size, a key map, a list, and a pop-up is referred to as a "skin." Such a skin may have an identical or similar meaning to a user interface provided to the user. Skins may be classified into a menu skin and item skins constituting the menu skin according to the type of a screen provided to the user. More particularly, the menu skin is not limited to the idle screen of a portable terminal, but includes the initial menu screen created by selecting a menu button and menu screens provided by respective portable terminal options after the idle screen is activated. Such a menu skin includes a basic menu skin, a phone book menu skin, a message transmitting menu skin, and a message receiving menu skin. The item skin defines the characteristics (e.g. location, size) of respective images, items, key maps, and pop-ups, which constitute a menu skin, and displays them in the same manner as they are defined. The item skin is linked with the menu skin. It is also possible to provide an item skin that is linked to a number of other item skins. Particularly, a menu skin includes at least one object, which corresponds to each item skin. As will be described later, a first selection skin refers to a new menu skin that can replace a predetermined menu skin, and a second selection skin refers to a new item skin that can replace a predetermined item skin. The above-mentioned skins may be fabricated through a standardization process, which may endow them with a predetermined mode, and may be distributed so that, when users apply skins, they can use a combination of skins having a predetermined frame. In addition, various skins may be available to various terminals. Standardized skins may be shared and utilized by users.

In addition, although an exemplary embodiment of the present invention will be described with reference to a mobile communication terminal as the portable terminal, the present invention is not limited thereto.

Particularly, the portable terminal according to an exemplary embodiment of the present invention refers to any type of terminal to which object-oriented skins can be applied, and includes every type of information communication device, multimedia device, and combination thereof, such as a mobile communication terminal, a digital broadcasting terminal, a Personal Digital Assistant (PDA), a smart phone, an International Mobile Telecommunication 2000 (IMT-2000 ) terminal, a Wideband Code Division Multiple Access (WCDMA) terminal, and a Universal Mobile Telecommunication Service (UMTS) terminal.

FIG. 2 shows how to convert the skin of a portable terminal according to an exemplary embodiment of the present invention.

Referring to FIG. 2, the skin conversion scheme according to an exemplary embodiment of the present invention includes a menu skin 100 to support a menu and item skins 200 constituting the menu skin 100. Respective item skins 200 may be created on an object-oriented basis so that they may be independently connected to/separated from the menu skin 100 and the other item skins 200.

The menu skin 100 refers to the screen showing a page corresponding to a specific service of the portable terminal that is created by selecting a menu button of a portable terminal. The menu skin 100 displays items regarding basic options provided by the portable terminal. The menu skin 100 according to the present invention is used to convert not only an image displayed outside a region in which an item is displayed, but also to convert an icon for indicating an item or an item skin 200 related to an image, at the user's request. The replacement of the menu skin 100 is conducted by downloading a first selection skin, which corresponds to the menu skin 100 and has a different background screen, a different item arrangement, etc. from the outside, storing it in the memory, and activating it based on the user's selection. The first selection skin according to an exemplary embodiment of the present invention is not limited to a skin including an item displayed in the menu skin 100 and an image displayed on the background screen of the item, but it may have different skin characteristics, such as the order or location of arrangement of items constituting the menu skin 100. The menu skin 100 includes a basic menu skin, a phone book menu skin, a message transmitting menu skin activated when a message is composed, and a message receiving menu skin activated when a received message is checked.

The item skins 200 are related to items constituting the menu skin 100, particularly detailed objects related to detailed items included in respective skins. Second selection skins applied to the item skins 200 include image objects, key objects, list objects, soft key objects, etc.

When the menu skin 100 is to be changed in manner providing for the menu and item skins 100 and 200 to be changed independently of each other, functions incorporated by objects constituting the previous menu skin 100 are respectively matched and linked with objects included in the first selection skin so that the item skins 200 may be changed and modified regardless of the change of the menu skin 100. When the item skins 200 are to be changed, a new second selection skin, which has replaced predetermined objects of the menu skin 100, is linked with the menu skin 100 so that the menu skin 100 may be changed regardless of whether the item skins 200 are changed or modified. Although it is assumed that the menu skin 100 includes a basic menu, a phone book menu, and a message transmitting/receiving menu, the type of menu is not limited thereto. Particularly, menus may also include a camera menu, a DMB menu, an MP3 menu, and a game menu, which may be provided by the portable terminal.

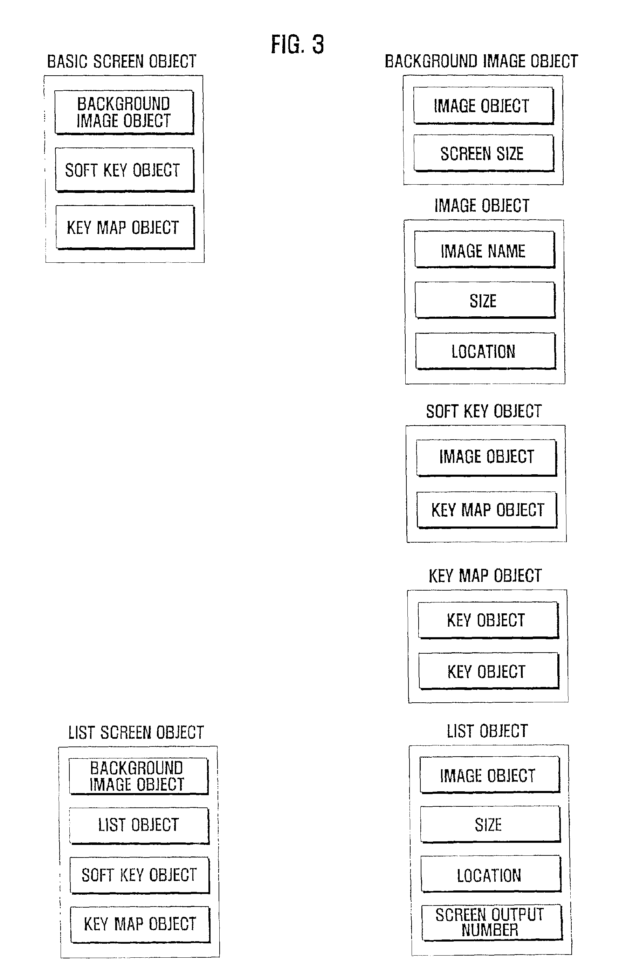

The object-oriented characteristics of the above-mentioned skins according to an exemplary embodiment of the present invention will now be described in detail with reference to FIG. 3.

FIG. 3 shows the stricture of objects included in item skins 200 constituting the menu skin 100.

Referring to FIG. 3, the menu skin 100 includes item skins 200, particularly a basic screen object and a list screen object. The basic screen object includes a combination of item skins 200, particularly a background image object, a soft key object, and a key map object. The background image object is characterized with regard to its image object and screen size, and the image object is characterized with regard to its image name, size, and location. The soft key object corresponds to an item skin 200 including an image object and a key map object, and the key map object may have an item skin 200 including a number of key objects having different characteristics. The key object specifies the key input mode of the portable terminal and may be varied depending on the portable terminal manufacturer or mobile communication business provider. When the user wants to replace the predetermined key input mode of the portable terminal with a desired one, he/she may download a key object, which has a desired key input mode, and apply it to the portable terminal. In addition, the user may attach a keypad having a key arrangement corresponding to the key object, for example, using a sticker, and use it.

The list screen object according to exemplary embodiments of the present invention includes a combination of a background image object, a list object, a soft key object, and a key map object. The list object may be defined with regard to its image object, size, location, and screen output number.

As mentioned above, according to the present invention, a single item skin 200 may be regarded as a skin. Alternatively, a number of item skins 200 may constitute a skin.

The skin conversion scheme according to an exemplary embodiment of the present invention is characterized in that respective menu skins 100 are not dependent, but independent of one another, and are selectively linked and provided as needed. As a result, various menu skins 100 and item skins 200 can be selectively applied or removed at the user's request.

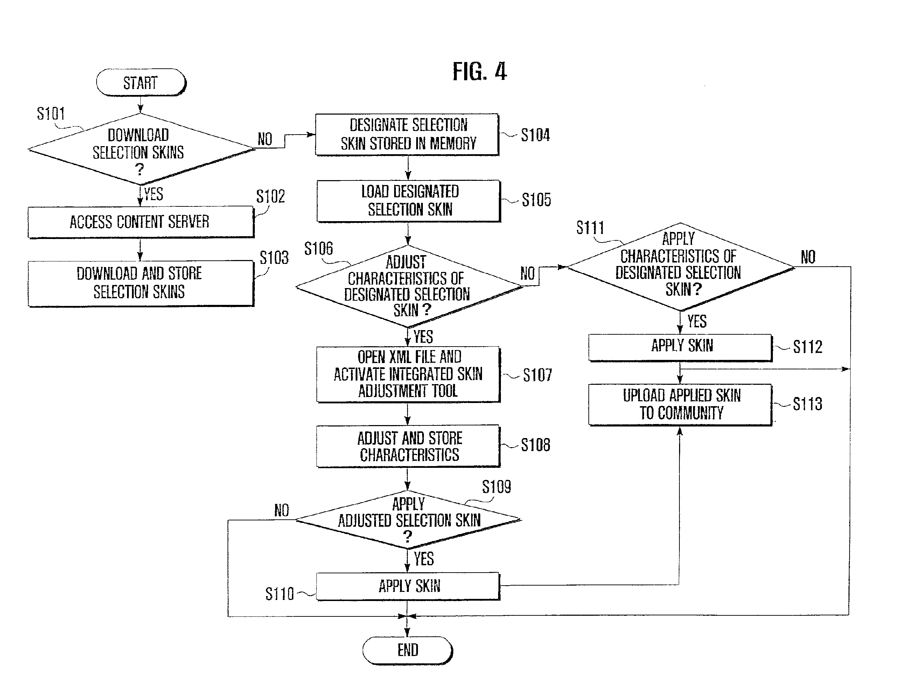

A skin conversion scheme according to an exemplary embodiment of the present invention has been described so far, and a skin conversion method based on the skin conversion scheme according to an exemplary embodiment of the present invention will now be described with reference to FIG. 4.

It is assumed prior to a description of the skin conversion method according to an exemplary embodiment of the present invention that first and second selection skins, which are objected-oriented skins, are provided so as to replace at least one menu skin 100 and item skin 200. As used herein, an object-oriented skin refers to a skin, the characteristics of which can be redefined by a skin interpreter contained in a portable terminal when the skin is applied to the portable terminal. Object-oriented skins do not fix the skin size or the location on the display unit of the portable terminal at which they are displayed, but have corresponding default values. This means that the size and location of skins may be modified by the skin interpreter after being downloaded to the portable terminal. Object-oriented skins include a first selection skin corresponding to a menu skin 100 constituting the display screen of the portable terminal and a second selection skin corresponding to item skins 200 constituting the menu skin 100.

FIG. 4 is a flowchart showing a skin conversion method according to an exemplary embodiment of the present invention.

Referring to FIG. 4, a user of a portable terminal determines whether or not to download a selection skin from a content server that provides first and second selection skins (S101).

If the user of a portable terminal has decided to download a selection skin in step S101, the portable terminal accesses the content server that provides the selection skin (S102).

The portable terminal accesses the content server via a mobile communication system using a wireless Internet channel (S102). Although a method for accessing the content server to download a selection skin according to an exemplary embodiment of the present invention is described herein, it is also possible to download a selection skin based on a wired connection with an external device, as mentioned above.

Then, the portable terminal downloads at least one of the first and second selection skins (S103).

The user of the portable terminal may download the first or second selection skin based on the desired application type in step S103. Particularly, when the user wants to replace the menu skin 100, a first selection skin may be downloaded, and, when the item skins 200 are to be replaced, a second selection skin may be downloaded. Instead of downloading the first or second selection skin, the user may pay a predetermined fee to obtain the skin.

If the user of the portable terminal has decided not to download a selection skin in step S101, the user may designate a selection skin stored in the memory of the portable terminal (S104).

When the memory stores first and second selection skins for replacing the menu and item skins 100 and 200, the user of the portable terminal may designate the corresponding selection skin (S104). The portable terminal may provide a screen interface, which shows the lists of selection skins, so that the user can view corresponding selection skins.

Then, the selection skin designated in step S104 is activated (S105).

The portable terminal may adjust the characteristics of the designated selection skin (S106).

Particularly, the portable terminal may adjust the size, activation location, etc. of the designated selection skin (S106).

When the portable terminal adjusts the characteristics of the designated selection skin in step S106, the characteristics of the selection skin stored in the memory can be changed by modifying values defined in the script of the skin (S107).

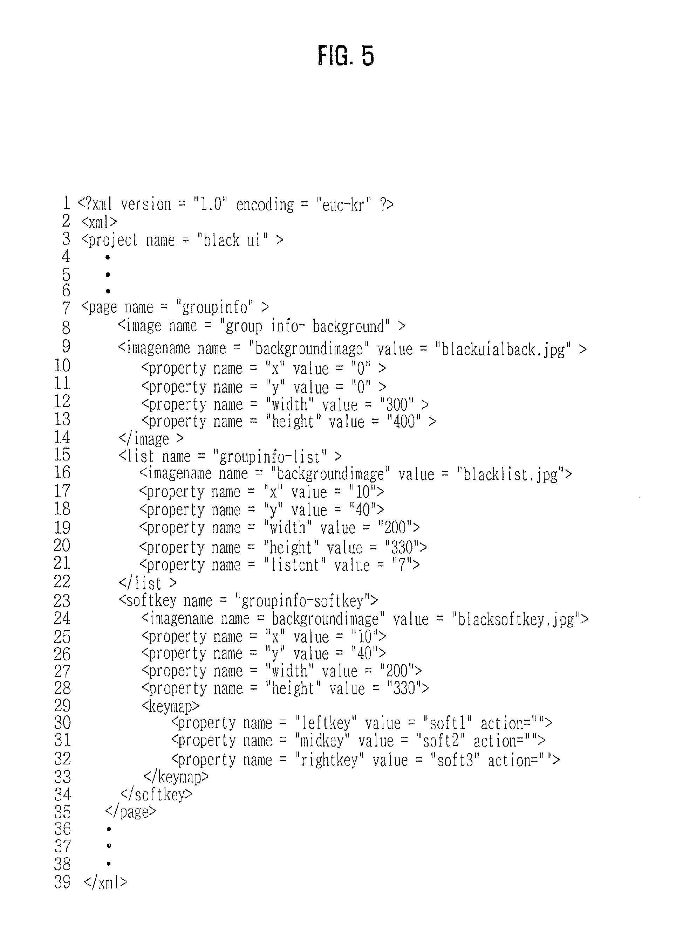

The portable terminal uses the skin interpreter, which is included in the controller, to open a script file of the selection skin, as shown in FIG. 5, and enable the user to modify and correct the opened script file and change the characteristics of the selection skin displayed on the portable terminal in step S107. The characteristics of the selection skin include the size (e.g. width, area) of the skin, the location at which the skin is displayed, and an image applied to the skin.

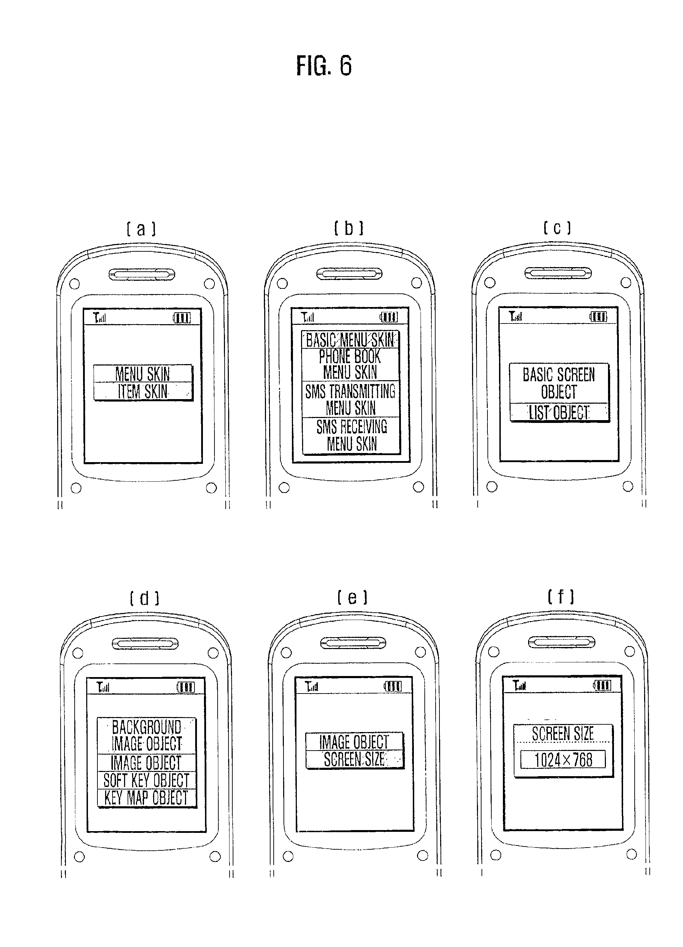

In order to adjust the characteristics of selection skins, the skin interpreter may provide not only script files, but also integrated skin adjustment tools, as shown in FIG. 6. Integrated skin adjustment tools provide a window [a] for selecting a menu skin 100 and an item skin 200. When the menu skin 100 is selected, a first selection skin may be applied so as to replace a basic menu skin, a phone book menu skin, a message transmitting menu skin, and a message receiving menu skin, all of which are included in the menu skin 100, as shown in window [b]. When the item skin 200 is selected, one of the basic menu skin, the phone book menu skin, the message transmitting menu skin, and the message receiving menu skin may be selected so as to clarify which item skin 200 of the menu skin 100 is to be replaced. When a menu skin 100 is selected, a window [c] is provided to select one of the basic screen object and the list screen object, which constitute the menu skin 100. If the basic screen object is selected, a window [d] is activated to select one of a background image object, an image object, a soft key object, and a key map object. If the background image object is selected, a window [e] is activated to select an image object and a screen size. If the screen size is selected from the window, an adjustment window [f] for inputting an adjustment value corresponding to a desired screen size is activated. Such an integrated skin adjustment tool is a kind of user interface facilitating the user's skin adjustment. Basically, adjustment of the integrated skin adjustment tool changes the XML script file.

Then, the portable terminal stores the selection skin, the characteristics of which have been adjusted (S108).

The user of the portable terminal determines whether or not to apply the adjusted selection skin to the corresponding skin (S109). If the user of the portable terminal has decided to apply the adjusted selection skin, the portable terminal applies it to the corresponding skin, particularly to the menu skin 100 or the item skin 200 (S110).

If the selection skin adjusted by the user of the portable terminal is a first selection skin related to the menu skin 100, the predetermined menu skin 100 may be replaced with the first selection skin in step S110. If the adjusted selection skin is a second selection skin related to the item skin 200, the predetermined item skin 200 may be replaced with the second selection skin. The first and second selection skins are applied to the menu and item skins 100 and 200, respectively. When there are a number of item skins 200 to be replaced, a corresponding number of second selection skins may be applied. At least two first and second selection skins may be applied in combination. The second selection skin is linked with the menu skin 100 so that the menu skin 100 and detailed items may be viewed by selecting the second selection skin from the menu skin 100, to which the first selection skin has been applied.

If the user of the portable terminal has decided not to adjust the characteristics of the designated selection skin (S106), the user of the portable terminal may determine whether or not to apply the designated selection skin for each corresponding skin (S111), and the portable terminal applies the designated selection skin for each corresponding skin (S112).

The skin conversion method according to exemplary embodiments of the present invention may further include adjusting the characteristics of the first and second selection skins, respectively, and uploading the applied skin to a server including a specific community by the user (S113).

For example, the user of the portable terminal may upload his/her own skin, which has been created by applying a first selection skin and a number of second selection skins, to a specific community so that other users can download and use it in step S113. In addition, the user may visit a different community, search for skins uploaded by other users, download a desired skin, and apply it to his/her portable terminal.

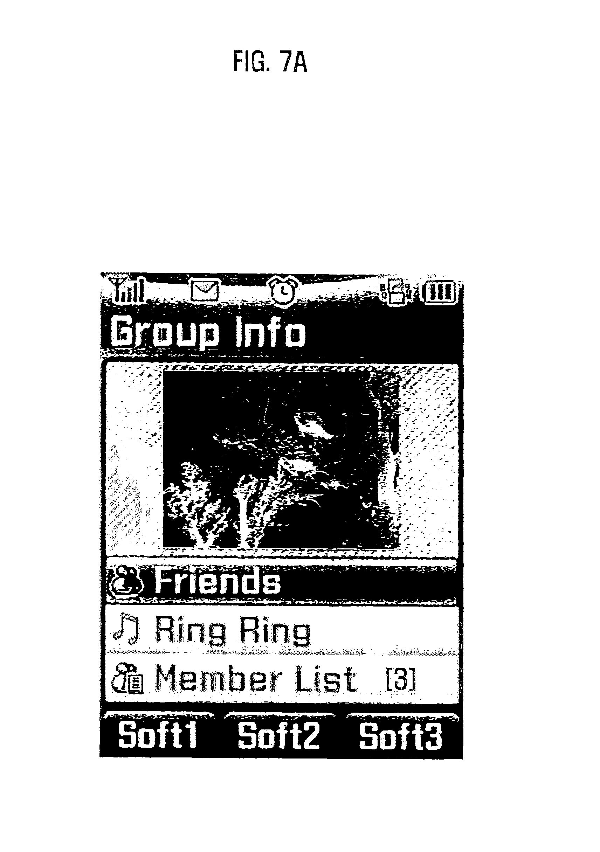

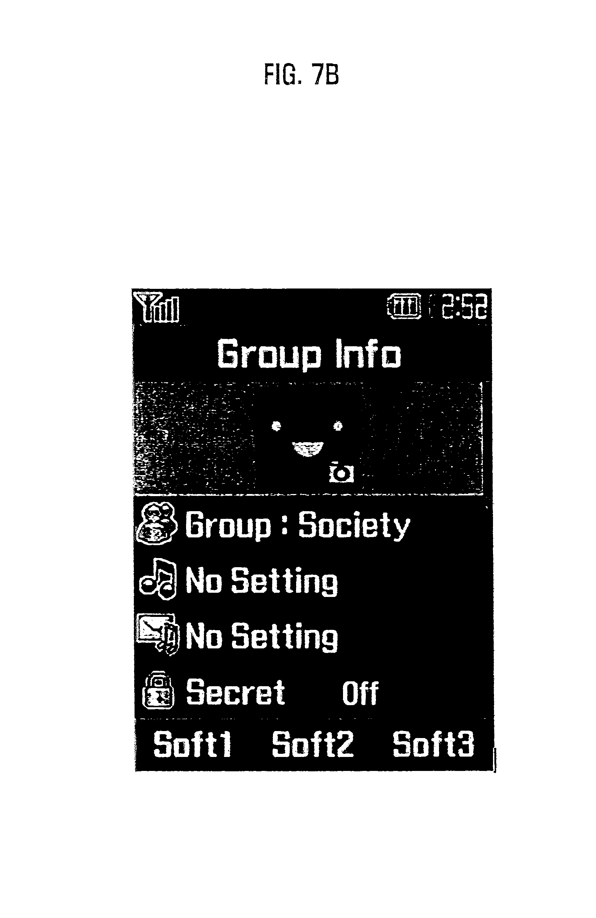

FIG. 7A shows the configuration of a screen before a skin conversion method is applied, and FIG. 7B shows the configuration of a screen after applying a downloaded selection skin according to a skin conversion method according to an exemplary embodiment of the present invention.

It is clear from FIG. 7A and FIG. 7B that, in the case of the screen to which a downloaded selection skin has been applied, the image object of the main background screen has been replaced with a new selection skin, the group category has been changed from "Friends" to "Society," and there is no setting regarding the bell sound, message group, and password, which can be designated after activating the skin interpreter. In addition, the menu skin 100 has more list items which may be viewed.

As mentioned above, the method for changing the skin of a portable terminal according to an exemplary embodiment of the present invention is **characterized in that** a menu skin 100 and item skins 200 constituting the menu skin 100 may be partially downloaded and applied as requested by the user. Downloaded skins may be adjusted by using the skin interpreter to satisfy various user demands.

A method for changing the skin of a portable terminal has been described, and a skin conversion system for realizing the skin conversion method according to an exemplary embodiment of the present invention will now be described.

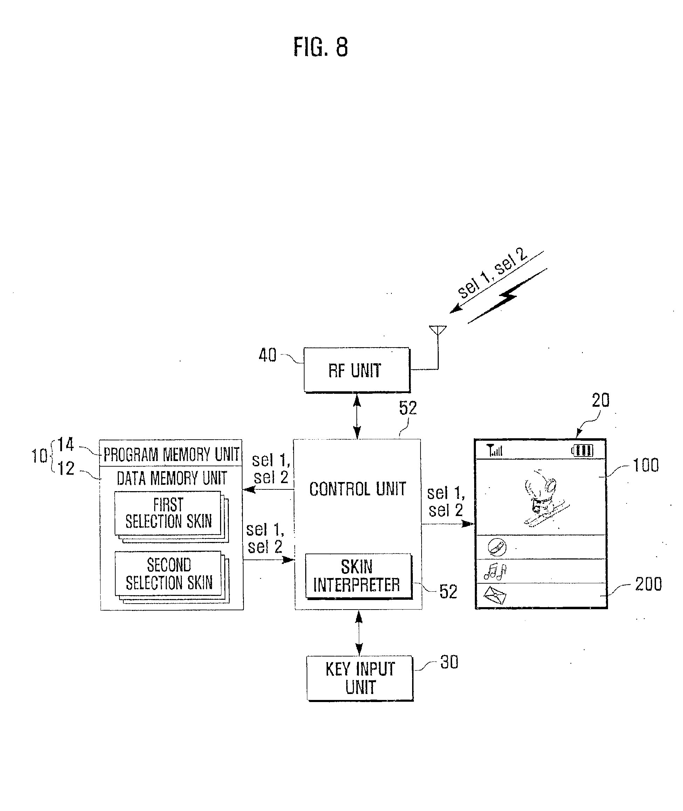

FIG. 8 shows the brief configuration of a system for changing the skin of a portable terminal according to an exemplary embodiment of the present invention.

Referring to FIG. 8, a portable terminal incorporating a skin conversion system according to an exemplary embodiment of the present invention includes a memory 10 to store first and second selection skins *Sel 1* and *Sel 2* downloaded from the outside, a display unit 20 to apply and display the first and second selection skins *Sel 1* and *Sel 2*, a key input unit 30 to create a key input signal so that at least one of the first and second selection skins *Sel 1* and *Sel 2* stored in the memory 10 is selected, a radio frequency (RF) unit 40 to establish a communication channel to download the first and second selection skins *Sel 1* and *Sel 2*, and a control unit 50 to control the flow of signals between respective components, adjust the characteristics of the first and second selection skins *Sel 1* and *Sel 2* stored in the memory 10, and apply them to the display unit 20. The control unit 50 includes a skin interpreter 52 to adjust the characteristics of the first and second selection skins *Sel. 1* and *Sel 2* stored in the memory 10.

The memory 10 includes a data memory unit 12 to store first and second selection skins *Sel 1* and *Sel 2* and a program memory unit 14 to store an operating system and applications necessary to drive the portable terminal. The data memory unit 12 may store a number of first and second selection skins *Sel 1* and *Sel 2*, respectively. When the control unit 50 selects a specific selection skin, it is activated and applied to the display unit 20. Although the first and second selection skins *Sel 1* and *Sel 2* may be stored in the data memory unit 12 in the same condition in which they were downloaded, they may be separately processed by the control unit 50 and then stored. The separate processing of selection skins corresponds to the adjustment of their characteristics by the skin interpreter 52 according to the user's taste or preference.

The display unit 20 displays a menu skin 100 and an item skin 200 according to predetermined settings of the portable terminal. Particularly, the first and second selection skins *Sel 1* and *Sel 2* stored in the memory 10 are applied to the menu and item skins 100 and 200, respectively, according to the selection of the user of the portable terminal, and then displayed accordingly. For example, if the user wants to replace the menu skin 100 with one of a number of first selection skins *Sel 1,* the desired one may be selected from a number of first selection skins *Sel 1* stored in the memory 10 and applied to the menu skin 100 of the display unit 20. As a result, the menu skin 100 may be replaced with the selected first selection skin *Sel 1,* which may then be displayed.

To this end, the display unit 20 displays a script file editing screen or an integrated skin adjustment tool, which is provided when the skin interpreter 52 of the control unit 50 is activated. The user of the portable terminal uses the script file editing screen or integrated skin adjustment tool, which is displayed by the display unit 20, so that a desired one of the first and second selection skins *Sel 1* and *Sel 2* is matched with the menu and item skins 100 and 200 of the display unit 20 and applied accordingly. As a result, the display unit 20 may provide a screen to which a new skin has been applied. The display unit 20 may display the list of first and second selection skins *Sel 1* and *Sel 2* stored in the memory 10 so that the user can select from them. The list of first and second selection skins *Sel 1* and *Sel 2* may be provided via a window included in the integrated skin adjustment tool. The menu and item skins 100 and 200 displayed by the display unit 20 may be applied in the same condition as when the first and second selection skins *Sel 1* and *Sel 2* have been downloaded. Alternatively, the menu and item skins 100 and 200 may be applied after the characteristics of the skins are adjusted by the integrated skin adjustment tool.

The key input unit 30 creates a key input signal necessary to use the portable terminal. Particularly, the key input unit 30 includes keys for editing texts to be transmitted, inputting desired telephone numbers, starting/ending a call, as well as direction keys, side keys, and shortcut keys. When the display unit 20 displays a script file editing screen, the key input unit 30 may be used for character input necessary to edit the script file. The key input unit 30 may also be used to input characters necessary for respective windows and make a key input for switching windows.

The RF unit 40 establishes a communication channel with a mobile communication system to conduct voice communication, data communication, etc. Particularly, the RF unit 40 according to exemplary embodiments of the present invention may selectively conduct data communication to download selection skins from a content server, which is interlinked with a mobile communication system so as to fabricate and provide various first and second selection skins *Sel 1* and *Sel 2* at the request of the user of the portable terminal.

The control unit 50 controls the flow of signals among the memory 10, the key input unit 30, the display unit 20, and the RF unit 40. More particularly, the control unit 50 controls the download of selection skins using the RF unit 40. The control unit 50 receives a key input signal to establish a communication channel with the content server from the key input unit 30 and controls the RF unit 40 accordingly. The control unit 50 activates various first and second selection skins *Sel 1* and *Sel 2*, which are stored in the memory 10, according to the user's selection made via the key input unit 30, so that they are matched with specific items of the display unit 20, e.g. menu and item skins 100 and 200, respectively, and the skin of the display unit 20 is converted. To this end, the control unit 50 includes a skin interpreter 52.

The skin interpreter 52 may display the list of first and second selection skins *Sel 1* and *Sel 2*, which are stored in the memory 10, on the display unit 20. In addition, the skin interpreter 52 may display a script file editing screen or an integrated skin adjustment tool for adjusting the characteristics of a selection skin selected from the first and second selection skins *Sel 1* and *Sel 2* on the display unit 20. Particularly, when the user designates at least one of the first and second selection skins *Sel 1* and *Sel 2* in order to convert the menu and item skins 100 and 200 on the display unit 20 into desired skins, the skin interpreter 52 may match the designated skin with the corresponding menu or item skin 100 and 200 and, if necessary, adjust the characteristics of the designated skin. For the adjustment of characteristics, the skin interpreter 52 may input adjustment values including the skin's size and display location, image objects, key objects, list objects, etc.

Although an exemplary embodiment of the present invention has been described with reference to a block diagram (FIG. 8) showing its operation, the present invention is not limited to the configuration shown in the drawing. Particularly, a portable terminal according to the present invention may further include a camera unit, an audio unit, etc., if necessary.

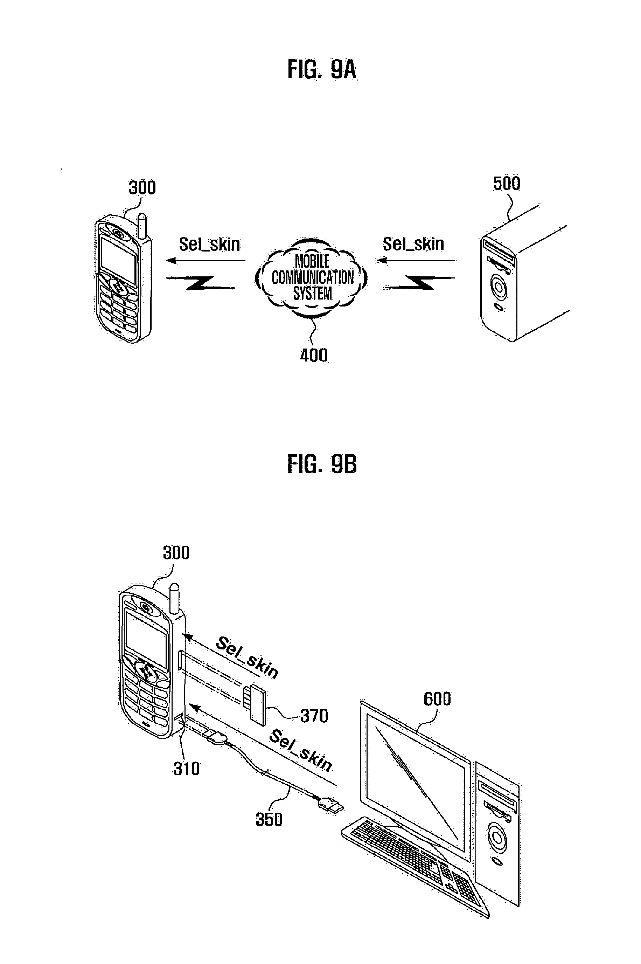

FIG. 9A and FIG. 9B show selection skin download systems for showing a process for obtaining skins by a portable terminal according to exemplary embodiments of the present invention.

Referring to FIG. 9A, a selection skin download system according to an exemplary embodiment of the present invention may include a portable terminal 300, a mobile communication system 400, and a content server 500 adapted to fabricate and provide selection skins.

The portable terminal 300 establishes a communication channel with the content server 500 via the mobile communication system 400 and accesses the content server 500 via the established communication channel. The portable terminal 300 selects a selection skin *Sel_skin,* which is to be downloaded or purchased, from various skins provided by the content server 500. This type of selection skin download system may guarantee the mobility of the portable terminal and, when a communication channel can be established, ensures that the user may obtain a desired selection skin *Sel_skin* regardless of the time and place.

Referring to FIG. 9B, the selection skin download system according to an exemplary embodiment of the present invention may connect to an external device 600 (e.g. PC), which stores the selection skin *Sel_skin,* via an external port 310 (e.g. USB port) formed on a side of the portable terminal 300 and a cable 350 so that the selection skin *Sel_skin* may be downloaded. In addition, the selection skin downoad system may directly connect to a port so that an external memory device 370 storing the selection skin *Sel_skin* may be connected to the portable terminal 300 to provide the selection skin *Sel_skin* for downloading. This type of selection skin download system guarantees a high download rate and, by omitting a procedure for accessing the content server, ensures that the selection skin *Sel_skin* may be obtained easily.

As mentioned above, the method and system for changing the skin of a portable terminal according to exemplary embodiments of the present invention are advantageous in that, by providing object-oriented skins which may be applied to the portable terminal and which may be connected/disconnected independently, the user of the portable terminal may partially apply a skin which is to be modified and converted and, by providing the entire skin associated with a partially applied skin, the consumer may apply skins in a diversified and easy manner.

In addition, by providing skins, which may be applied to the portable terminal and the characteristics of which may be manually defined by the user of the portable terminal, and enabling users to share their customized skins, the originality and diversity of respective users may be supported.

Furthermore, by providing skins which are applied to the portable terminal and which are adapted for respective menus in a detailed and diversified manner, the user of the portable terminal may be encouraged to utilize skins so that the development and sale of skins may create new economic merits.

Moreover, by providing a standardized skin including the location and size of images and items applicable to the portable terminal, key maps, the number, location, and contents of lists, the location and size of pop-ups, etc., a skin may be combined according to the user's request and may be easily applied to the portable terminal, thereby satisfying various user demands.

The effects of the present invention are not limited to the above-mentioned effects, and other effects not mentioned above can be clearly understood from the definitions in the claims by one skilled in the art.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

Although the invention can be defined as stated in the attached claims, it is to be understood that the present invention can alternatively also be defined as stated in the following embodiments:
1. A method for changing a skin of a portable terminal, the method comprising:
   downloading and storing a selection skin;
   designating and activating the stored selection skins;
   determining whether to adjust characteristics of the activated selection skin;
   adjusting a script file to adjust characteristics of the activated selection skin according to a result of the determination of whether to adjust the characteristics of the activated selection skin; and
   storing the activated selection skin having the adjusted characteristics.
2. The method of embodiment 1, further comprising replacing the skin with the adjusted selection skin.
3. The method of embodiment 1, further comprising uploading a skin to a server, the adjusted selection skin having been applied to the uploaded skin.
4. The method of embodiment 1, wherein the adjusting comprises:
   activating a skin interpreter of a control unit;
   creating a script file editing screen for the activated selection skin by using the skin interpreter or activating an integrated skin adjustment tool to adjust the activated selection skin by using the skin interpreter; and
   inputting a value to adjust the characteristics of the activated selection skin and applying the value to the activated selection skin.
5. The method of embodiment 1, wherein the selection skin is a first selection skin to replace a menu skin having at least one object constituting the screen of the portable terminal or a second selection skin to replace an item skin corresponding to the object.
6. The method of embodiment 5, wherein the selection skin is the first selection skin, and the method further comprises applying the first selection skin to the menu skin, and applying the first selection skin comprises:
   replacing objects constituting the menu skin with objects contained in the first selection skin; and linking the replaced objects with a function linked with objects contained in the menu skin.
7. The method of embodiment 5, wherein the selection skin is the first selection skin and the menu skin comprises a basic menu skin, a phone book menu skin, a message transmitting menu skin, and a message receiving menu skin.
8. The method of embodiment 5, wherein the selection skin is the second selection skin and the item skin comprises a basic screen object and a list screen object, the basic screen object comprising a background image object, a soft key object, and a key map object, and the list screen object comprising a background image object, a list object, a soft key object, and a key map object.
9. The method of embodiment 1, wherein the downloading comprises:
   accessing a content server via a mobile communication system, the content server providing the selection skin; and
   selecting and downloading the selection skins from the content server.
10. The method of embodiment 1, wherein the downloading comprises:
   connecting the portable terminal to an external device via a cable, the external device storing the selection skins; and
   downloading the selection skins stored in the external device.
11. The method of embodiment 1, wherein the downloading comprises:
   connecting an external memory to the portable terminal, the external memory storing the selection skins; and
   downloading the selection skins.
12. A method for changing a skin of a portable terminal, the method comprising:
   downloading and storing a first selection skin and a second selection skin,
   the first selection skin being adapted to replace a menu skin having at least one object constituting a screen of the portable terminal, the second selection skin being adapted to replace an item skin corresponding to the object; and
   applying a stored selection skin to at least one of the menu skin and the item skin.
13. The method of embodiment 12, further comprising uploading a skin to a server, the stored selection skin having been applied to the uploaded skin.
14. The method of embodiment 12, further comprising adjusting characteristics of the stored selection skin, wherein adjusting characteristics of the stored selection skin comprises:
   activating a skin interpreter of a control unit;
   creating a script file editing screen for the stored selection skin using the skin interpreter or activating an integrated skin adjustment tool to adjust the stored selection skin by using the skin interpreter; and
   inputting a value to adjust characteristics of the stored selection skin and
   apply the value to the stored selection skin.
15. The method of embodiment 12, further comprising:
   replacing a target skin with the adjusted selection skin; and
   uploading a skin to a server, the adjusted selection skin having been applied to the uploaded skin.
16. A system for changing a skin of a portable terminal, the system comprising:
   a memory to store at least one of a first selection skin and a second selection skin, the first selection skin being adapted to replace a menu skin having at least one object constituting a screen of the portable terminal, the second selection skin being adapted to replace an item skin corresponding to the object;
   a display unit to apply and display a designated selection skin of the stored selection skins;
   a key input unit to create a key input signal to select from the selection skins stored in the memory;
   a radio frequency (RF) unit to establish a communication channel to download at least one of the first selection skin and the second selection skin; and
   a control unit to control a flow of signals among the memory, the display unit, the key input unit, and the RF unit, to adjust characteristics of selection skins stored in the memory, and to apply the adjusted selection skin to the display unit.
17. The system of embodiment 16, wherein the control unit comprises a skin interpreter to adjust the characteristics of the stored selection skins, and the skin interpreter is adapted to open an XML script file for selecting from the stored selection skins and adjusting characteristics or create an integrated skin adjustment tool so that the XML script file can be edited.
18. The system of embodiment 16, wherein the control unit is adapted to replace objects constituting the menu skin with objects contained in the first selection skin and link the replaced objects with a function linked with objects contained in the menu skin.
19. The system of embodiment 16, wherein the menu skin comprises a basic menu skin, a phone book menu skin, a message transmitting menu skin, and a message receiving menu skin.
20. The system of embodiment 16, wherein the item skin comprises a basic screen object and a list screen object, the basic screen object comprising a background image object, a soft key object, and a key map object, and the list screen object comprising a background image object, a list object, a soft key object, and a key map object.

## Claims

1. A method for changing a skin of a portable terminal, the method comprising:
downloading and storing a selection skin;
designating and activating the stored selection skins;
determining whether to adjust characteristics of the activated selection skin;
adjusting a script file to adjust characteristics of the activated selection skin according to a result of the determination of whether to adjust the characteristics of the activated selection skin; and
storing the activated selection skin having the adjusted characteristics.

2. The method of claim 1, further comprising replacing the skin with the adjusted selection skin.

3. The method of claim 1, further comprising uploading a skin to a server, the adjusted selection skin having been applied to the uploaded skin.

4. The method of claim 1, wherein the adjusting comprises:
activating a skin interpreter of a control unit;
creating a script file editing screen for the activated selection skin by using the skin interpreter or activating an integrated skin adjustment tool to adjust the activated selection skin by using the skin interpreter; and
inputting a value to adjust the characteristics of the activated selection skin and applying the value to the activated selection skin.

5. The method of claim 1, wherein the selection skin is a first selection skin to replace a menu skin having at least one object constituting the screen of the portable terminal or a second selection skin to replace an item skin corresponding to the object.

6. The method of claim 5, wherein the selection skin is the first selection skin, and the method further comprises applying the first selection skin to the menu skin, and applying the first selection skin comprises:
replacing objects constituting the menu skin with objects contained in the first selection skin; and
linking the replaced objects with a function linked with objects contained in the menu skin.

7. The method of claim 5, wherein the selection skin is the first selection skin and the menu skin comprises a basic menu skin, a phone book menu skin, a message transmitting menu skin, and a message receiving menu skin.

8. The method of claim 5, wherein the selection skin is the second selection skin and the item skin comprises a basic screen object and a list screen object, the basic screen object comprising a background image object, a soft key object, and a key map object, and the list screen object comprising a background image object, a list object, a soft key object, and a key map object.

9. The method of claim 1, wherein the downloading comprises:
accessing a content server via a mobile communication system, the content server providing the selection skin; and
selecting and downloading the selection skins from the content server.

10. The method of claim 1, wherein the downloading comprises at least one of:
connecting the portable terminal to an external device via a cable, the external device storing the selection skins, and downloading the selection skins stored in the external device; and
connecting an external memory to the portable terminal, the external memory storing the selection skins, and downloading the selection skins stored in the external memory.

11. A system for changing a skin of a portable terminal, the system comprising:
a memory to store at least one of a first selection skin and a second selection skin, the first selection skin being adapted to replace a menu skin having at least one object constituting a screen of the portable terminal, the second selection skin being adapted to replace an item skin corresponding to the object;
a display unit to apply and display a designated selection skin of the stored selection skins;
a key input unit to create a key input signal to select from the selection skins stored in the memory;
a radio frequency (RF) unit to establish a communication channel to download at least one of the first selection skin and the second selection skin; and
a control unit to control a flow of signals among the memory, the display unit, the key input unit, and the RF unit, to adjust characteristics of selection skins stored in the memory, and to apply the adjusted selection skin to the display unit.

12. The system of claim 11, wherein the control unit comprises a skin interpreter to adjust the characteristics of the stored selection skins, and the skin interpreter is adapted to open an XML script file for selecting from the stored selection skins and adjusting characteristics or create an integrated skin adjustment tool so that the XML script file can be edited.

13. The system of claim 11, wherein the control unit is adapted to replace objects constituting the menu skin with objects contained in the first selection skin and link the replaced objects with a function linked with objects contained in the menu skin.

14. The system of claim 11, wherein the menu skin comprises a basic menu skin, a phone book menu skin, a message transmitting menu skin, and a message receiving menu skin.

15. The system of claim 11, wherein the item skin comprises a basic screen object and a list screen object, the basic screen object comprising a background image object, a soft key object, and a key map object, and the list screen object comprising a background image object, a list object, a soft key object, and a key map object.
